Europäisches Patentamt

European Patent Office

Office européen des brevets

(19)

(11) Veröffentlichungsnummer : **0 087 507**
**B1**

(12)

# EUROPÄISCHE PATENTSCHRIFT

(45) Veröffentlichungstag der Patentschrift :
21.01.87

(51) Int. Cl.⁴ : **G 01 L   5/24**

(21) Anmeldenummer : **82110644.0**

(22) Anmeldetag : **18.11.82**

(54) **Verfahren zur Bestimmung oder Prüfung der Vorspannkraft von Schrauben.**

(30) Priorität : **02.03.82 DE 3207346**

(43) Veröffentlichungstag der Anmeldung :
**07.09.83 Patentblatt 83/36**

(45) Bekanntmachung des Hinweises auf die Patenterteilung : **21.01.87 Patentblatt 87/04**

(84) Benannte Vertragsstaaten :
**CH DE FR GB IT LI**

(56) Entgegenhaltungen :
**GB-A- 1 491 103**
**US-A- 3 307 393**
**US-A- 4 318 302**
**PROCEEDINGS OF THE NAT. ELEC. CONF., Band 35, Oktober 1981, Seiten 435-440, Oak Brook, Illinois, USA**
**S. G. JOSHI et al.: "Measurement of bolt stress using an ultrasonic bolt monitor"**

(73) Patentinhaber : **Klöckner-Humboldt-Deutz Aktiengesellschaft**
**Deutz-Mülheimer-Strasse 111 Postfach 80 05 09**
**D-5000 Köln 80 (DE)**

(72) Erfinder : **Steffen, Franz-Josef**
**Eupener Strasse 1**
**D-5000 Köln 90 (DE)**
Erfinder : **Reinhardt, Paul, Ing.**
**Lülsdorffstrasse 1**
**D-5000 Köln 80 (DE)**

**Beschreibung**

Die Erfindung bezieht sich auf ein Verfahren zur Bestimmung oder Prüfung der Vorspannkraft von Schrauben, insbesondere von Dehnschrauben, z. B. zur Befestigung von Zylinderköpfen von Brennkraftmaschinen.

Hochbeanspruchte Dehnschrauben zur Befestigung von Zylinderköpfen von Brennkraftmaschinen unterliegen erheblichen Forderungen bezüglich einer genauen Einstellung der Vorspannkraft. Diese Forderungen sind mit üblichen Drehmomentenschlüsseln, bei denen das aufgebrachte Anzugsmoment zur Bestimmung der Vorspannkraft herangezogen wird, nicht hinreichend zu erfüllen, da variierende Reibbedingungen im Schraubengewinde und an der Auflagefläche des Schraubenkopfes das Meßergebnis negativ beeinflussen. Mit besonderen Schraubenanziehverfahren, z. B. Drehmoment-Drehwinkel-Anzug oder streckgrenzengesteuerter Anzug, sind zwar relativ genaue Einstellungen der Vorspannkraft möglich, eine nachträgliche Kontrolle der erreichten Vorspannkraft von vorgespannten Schrauben bereitet jedoch immer noch Schwierigkeiten.

Aus der Literaturstelle « Proceedings of the Nat. Electronic Conference », Band 35 (1981), Oktober, Seiten 435 bis 440, Oak Brook, Illinois, USA gehen mehrere Verfahren zur Messung der Spannkraft an Schrauben als bekannt hervor :

In einem Verfahren (pulse-echo techniques) ist zentral am Schraubenkopf ein kombinierter Sende/Empfänger für Ultraschall angeordnet. Nach Aufgeben eines Ultraschallimpulses wird die Zeit des am Schraubenende reflektierten Echos gemessen, wobei die Zeit proportional der Schraubenspannkraft ist.

In einem weiteren, aus dieser Literaturstelle bekannten Verfahren (pseudo-continuous-wave technique) wird über einen kombinierten Sender/Empfänger am Schraubenkopf die Schraube mit einer Mischfrequenz angeregt. In einer kurzen Anregungspause wird die sich ausbildende Resonanzfrequenz der Schraube erfaßt, wobei sich die Resonanzfrequenz entsprechend der eingestellten Vorspannkräfte ändert. Durch Vergleich der mittels des bekannten Verfahrens ermittelten Resonanzfrequenz mit einer schraubencharakteristischen Eichkurve kann so die Schraubenvorspannkraft bestimmt werden.

Aus der GB-A-1 491 103 ist bekannt, mit einem Ultraschallwandler eine Dehnschraube anzuregen und deren Resonanzfrequenz zu erfassen. Als Maß für die anliegende Vorspannkraft wird die normierte Differenz der sich in Abhängigkeit der Vorspannkraft wechselnden Resonanzfrequenzen herangezogen, wobei die ermittelten Werte mit einer in Abhängigkeit von der Vorspannkraft der Schrauben ermittelten Eichkurve verglichen werden.

Zur Ausführung der bekannten Verfahren sind hochempfindliche Ultraschallwandler notwendig, denen zur Schwingungsanregung der zu messenden Schraube entsprechend hohe Energien über entsprechende Generatoren zugeführt werden. Da die Ultraschallwandler auch als Empfänger arbeiten müssen, ist der technische Aufwand sehr hoch, so daß der Einsatz der bekannten Verfahren nur in Meßlabors, nicht jedoch im praktischen Motorenbau sinnvoll ist.

Der Erfindung liegt deshalb die Aufgabe zugrunde, ein im praktischen Motorenbau einsetzbares Verfahren zu entwickeln, das eine sichere, genaue Bestimmung der Vorspannkraft von Dehnschrauben auf einfache Weise ermöglicht.

Diese Aufgabe wird erfindungsgemäß durch die Merkmale des ersten Anspruchs gelöst.

Die Erfindung nutzt die Erkenntnis aus, daß die Biegeeigenfrequenz einer montierten Schraube stark von ihrer Vorspannkraft abhängt. Durch Messen der Biegeeigenfrequenz kann die Vorspannkraft der Schraube mit hoher Genauigkeit ermittelt werden. Durch den auf die Bauteile aufgebrachten Impuls, der manuell oder auch mittels hydraulischer, pneumatischer oder elektromechanischer Einrichtungen aufgebracht werden kann, wird die Schraube zu Biegeschwingungen angeregt, die am Schraubenkopf geringe Kippbewegungen mit der Frequenz der Biegeschwingungen verursachen. Im äußeren radialen Bereich des Schraubenkopfes lassen sich diese Kippbewegungen als Axialbewegungen abtasten und können mittels eines Beschleunigungsaufnehmers einfachen und robusten Aufbaus erfaßt werden.

Als Beschleunigungsaufnehmer sind piezoelektrische, induktive oder kapazitive Wegaufnehmer besonders geeignet. Die von dem Aufnehmer erfaßten, annähernd sinusförmigen Signale werden von einem Verstärker in eine Wechselspannung verwandelt, deren Frequenz der Biegeeigenfrequenz der Schrauben entspricht. Mit dem erfindungsgemäßen Verfahren sind — bei einfachem Aufbau — selbst geringe Axialbewegungen mit hoher Empfindlichkeit erfaßbar.

Zweckmäßigerweise werden die von der Meßvorrichtung ermittelten Werte digital von einer nachgeschalteten Zähleinrichtung optisch ablesbar dargestellt. Die ermittelten Werte können so leicht mit einer zuvor in Abhängigkeit der Vorspannkraft der Schrauben erstellten Eichkurve verglichen werden. Es kann auch vorteilhaft sein, anstelle einer digitalen Darstellung eine analoge Darstellung mit z. B. einem Linienschreiber vorzusehen.

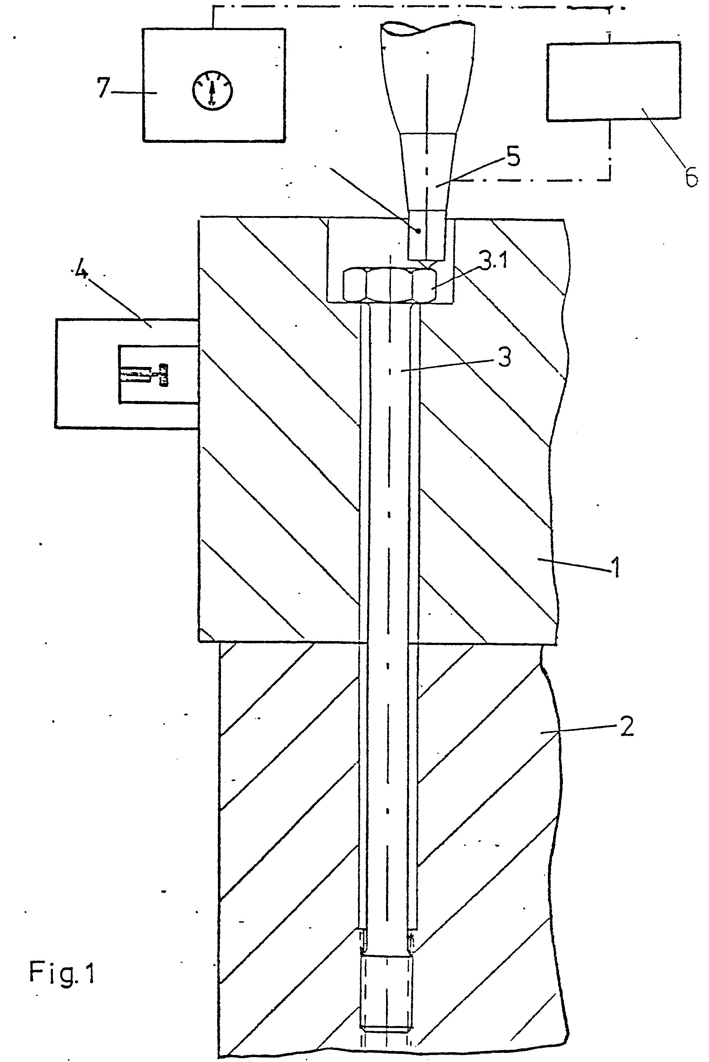

Im folgenden wird die Erfindung anhand eines Ausführungsbeispiels erläutert (vgl. Fig. 1).

Die Bauteile 1 und 2 sind mittels einer langen Dehnschraube 3 miteinander verbunden. Diese Verbindung soll höchsten Beanspruchungen standhalten, so daß die Schraube bis in die Nähe der Streckgrenze des Schraubenwerkstoffes angezogen ist. Um die Vorspannkraft der Schraube genau zu überprüfen, wird die Schraube 3 mittels eines Impulsgebers 4 in Biegeschwingungen versetzt. Diese Biegeschwingungen der Schraube 3 treten am Schraubenkopf 3.1 als geringe Kippbewegungen mit der Frequenz der Biegeschwingungen auf. Im äußeren radialen Bereich des Schraubenkopfes 3.1 lassen sich diese Kippbewegungen als Axialbewegungen mittels eines Beschleunigungsaufnehmers 5 abtasten. Hierbei verläuft die Meßrichtung des Beschleunigungsaufnehmers 5 parallel zur Schraubenlängsachse. Die vom Beschleunigungsaufnehmer 5 ermittelten Werte werden von einem Verstärker 6 in eine Wechselspannung verwandelt, deren frequenz von einer nachgeschalteten Zähleinrichtung 7 optisch ablesbar dargestellt wird. Die dargestellte Frequenz kann nun leicht und genau mit einer zuvor in Abhängigkeit der Vorspannkraft der Schraube ermittelten Eichkurve verglichen werden.

## Patentansprüche

1. Verfahren zur Bestimmung der Vorspannkraft einer Dehnschraube, insbesondere von langen Dehnschrauben zur Befestigung von Zylinderköpfen von Brennkraftmaschinen, wobei die Dehnschraube (3) zu Schwingungen angeregt wird, am Schraubenkopf (3.1) die Resonanzfrequenz der Schraube (3) abgegriffen wird und aus der Resonanzfrequenz die Vorspannkraft der Schraube ermittelt wird, dadurch gekennzeichnet, daß die Schraube (3) durch einen auf die von ihr zusammengehaltenen Bauteile (1.2) aufgebrachten Impuls zu Schwingungen angeregt wird, daß die Resonanzfrequenz durch Abtasten der Biegeeigenfrequenz der Schraube (3) an einem äußeren radialen Bereich des Schraubenkopfes (3.1) mittels einer Meßvorrichtung (5) erfaßt wird und daß die von der Meßvorrichtung (5) ermittelten Werte mit einer in Abhängigkeit der Vorspannkraft der Schraube (3) erstellten Eichkurve verglichen werden.

2. Verfahren nach Anspruch 1, dadurch gekennzeichnet, daß die Meßvorrichtung (5) von einem Beschleunigungsaufnehmer gebildet wird.

3. Verfahren nach Anspruch 1 oder 2, dadurch gekennzeichnet, daß die von der Meßvorrichtung (5) ermittelten Werte digital dargestellt werden.

4. Verfahren nach Anspruch 1 oder 2, dadurch gekennzeichnet, daß die von der Meßvorrichtung ermittelten Werte analog dargestellt werden.

## Claims

1. A method for the determination of the initial stress force of a necked-down bolt or screw, especially of long necked-down bolts or screws for the securing of cylinder heads of internal combustion engines, wherein the necked-down bolt or screw (3) is stimulated into vibrations, the resonance frequency of the bolt or screw (3) is measured on the bolt or screw head (3.1) and the initial stress force of the bolt or screw is ascertained from the resonance frequency, characterised in that the bolt or screw (3) is stimulated into vibrations by a pulse applied to the components (1, 2) held together by it, that the resonance frequency is detected by reading the natural bending frequency of the bolt or screw (3) at an external radial region of the bolt or screw head (3.1) by means of a measuring device (5) and that the values ascertained by the measuring device (5) are compared with a calibration curve produced in dependence on the initial stress force of the bolt or screw (3).

2. A method according to claim 1, characterised in that the measuring device (5) is formed by an acceleration detector.

3. A method according to claim 1 or 2, characterised in that the values ascertained by the measuring device (5) are represented digitally.

4. A method according to claim 1 or 2, characterised in that the values ascertained by the measuring device are represented analogously.

## Revendications

1. Procédé pour déterminer l'effort de précontrainte d'une vis extensible, notamment de longues vis extensibles servant à la fixation des culasses de moteurs à combustion interne, la vis extensible (3) étant excitée en vibrations, la fréquence de résonance de la vis (3) étant captée sur la tête (3.1) de la vis et l'effort de précontrainte de la vis étant déterminée à partir de cette fréquence de résonance, procédé caractérisé en ce que la vis (3) est excitée en vibrations par une impulsion appliquée aux parties constitutives (1.2) maintenues ensemble par cette vis, la fréquence de résonance étant détectée par analyse de la fréquence propre de flexion de la vis (3) sur une zone radiale externe de la tête (3.1) de la vis au moyen d'un dispositif de mesure (5), tandis que les valeurs déterminées par ce dispositif de mesure (5) sont comparées avec une courbe étalon établie en fonction de l'effort de précontrainte de la vis (3).

2. Procédé selon la revendication 1, caractérisé en ce que le dispositif de mesure (5) est constitué par un capteur d'accélérations.

3. Procédé selon la revendication 1 ou 2, caractérisé en ce que les valeurs déterminées par le dispositif de mesure (5) sont mises sous forme numérique.

4. Procédé selon la revendication 1 ou 2, caractérisé en ce que les valeurs déterminées par le dispositif de mesure sont mises sous forme analogique.

Fig.1